Europäisches Patentamt

European Patent Office

Office européen des brevets

(19)

(11) **EP 1 168 705 A1**

(12) ## DEMANDE DE BREVET EUROPEEN

(43) Date de publication:
**02.01.2002 Bulletin 2002/01**

(51) Int Cl.⁷: **H04L 1/20**

(21) Numéro de dépôt: **01202390.9**

(22) Date de dépôt: **20.06.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **30.06.2000 FR 0008541**

(71) Demandeur: **Koninklijke Philips Electronics N.V.
5621 BA Eindhoven (NL)**

(72) Inventeur: **Charkani, Nabil
75008 Paris (FR)**

(74) Mandataire: **de la Fouchardière, Marie-Noelle
Société Civile "SPID" 156, Boulevard Haussmann
75008 Paris (FR)**

(54) **Procédé et système pour la détection de trames de parole erronées**

(57)   L'invention concerne une méthode de détection d'erreurs applicable même dans de mauvaises conditions de transmission. Elles comporte des moyens pour détecter une erreur de transmission dans une trame de données en fonction d'une information de saturation de la bande de fréquence à laquelle la trame appartient pour en déduire une indication de trame erronée.

Application : télécommunications numériques, téléphonie radio mobile.

FIG. 1

EP 1 168 705 A1

## Description

L'invention concerne la détection d'erreurs de transmissions dans les systèmes de transmissions numériques.

Elle a de nombreuses applications notamment dans les systèmes de télécommunications audio ou vidéo qui utilisent un canal de transmission susceptible d'être soumis à de mauvaises conditions de transmission (bruits sur le canal, interférences, etc.).

Une méthode de détection d'erreurs est décrite dans le brevet américain publié sous le numéro 5 706 396. Cette méthode s'applique à un signal numérique audio codé en sous-bandes de fréquences. Un ou plusieurs paramètres caractéristiques du signal et dépendants du codeur utilisé sont déterminés pour chaque sous-bande. Les signaux codés ainsi que les paramètres sont alors protégés par des codes correcteurs d'erreurs avant d'être transmis sur le canal pour être ensuite reçus et décodés par un récepteur. La méthode de détection d'erreurs consiste à détecter des variations brusques des paramètres reçus avant d'appliquer les codes correcteurs d'erreurs qui réalisent le décodage de canal. Cette méthode suppose que le signal comporte un paramètre caractéristique identifiable qui dépend notamment du codeur de parole utilisé pour la transmission.

Un objet de l'invention est d'améliorer la détection d'erreurs de transmissions indépendamment du codeur de parole utilisé. Cette détection peut alors se faire sur le signal de parole décodé, ce qui n'est pas le cas de la méthode citée. Pour cela, l'invention prévoit un récepteur et un procédé de réception pour recevoir, dans une bande de fréquences donnée, un signal numérique formaté en trames de données successives et comportant des moyens pour :

- filtrer le signal reçu dans au moins une sous-bande de fréquences,
- détecter une saturation du signal dans l'une des sous-bande de fréquences filtrées et pour fournir une information de saturation de ladite sous-bande,
- détecter une erreur de transmission dans une trame reçue, dit trame courante en fonction de l'information de saturation de la sous-bande a laquelle appartient la trame courante pour en déduire une indication de trame erronée.

L'invention prévoit également un programme d'ordinateur programmé pour exécuter le procédé selon l'invention, ainsi qu'un système et un téléphone comportant un récepteur selon l'invention.

La description suivante, faite en regard des dessins ci-annexés, le tout donné à titre d'exemple non limitatif fera bien comprendre comment l'invention peut être réalisée.

La figure 1 est un schéma bloc représentant un exemple de récepteur selon l'invention.

La figure 2 est un diagramme bloc pour illustrer un procédé selon l'invention .

La figure 3 est un schéma bloc représentant un premier mode de réalisation d'un récepteur selon la figure 1.

La figure 4 est un schéma bloc représentant un deuxième mode de réalisation d'un récepteur selon la figure 1.

La figure 5 est un schéma pour illustrer un système et un téléphone selon l'invention.

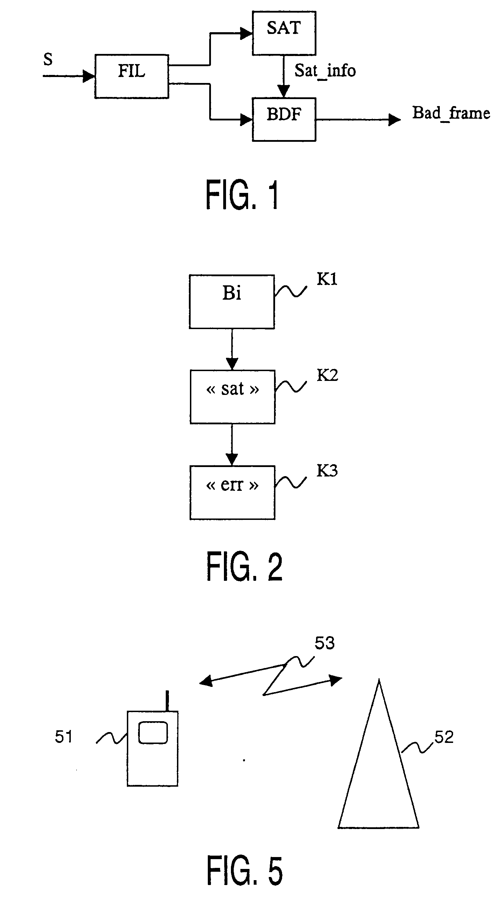

Le récepteur de la figure 1 est destiné à recevoir, dans une bande de fréquences donnée, un signal numérique S formaté en trames de données successives. Il comporte :

- un bloc de filtrage FIL pour filtrer le signal reçu dans au moins une sous-bande de fréquences,
- un détecteur de saturation SAT pour détecter une saturation du signal dans l'une des sous-bande de fréquences filtrées et pour fournir une information de saturation Sat_info de ladite sous-bande,
- un détecteur de trame erronée BFD pour détecter une erreur de transmission dans une trame reçue, dit trame courante en fonction de l'information de saturation Sat_info de la sous-bande a laquelle appartient la trame courante et pour en déduire une indication de trame erronée bad_frame.

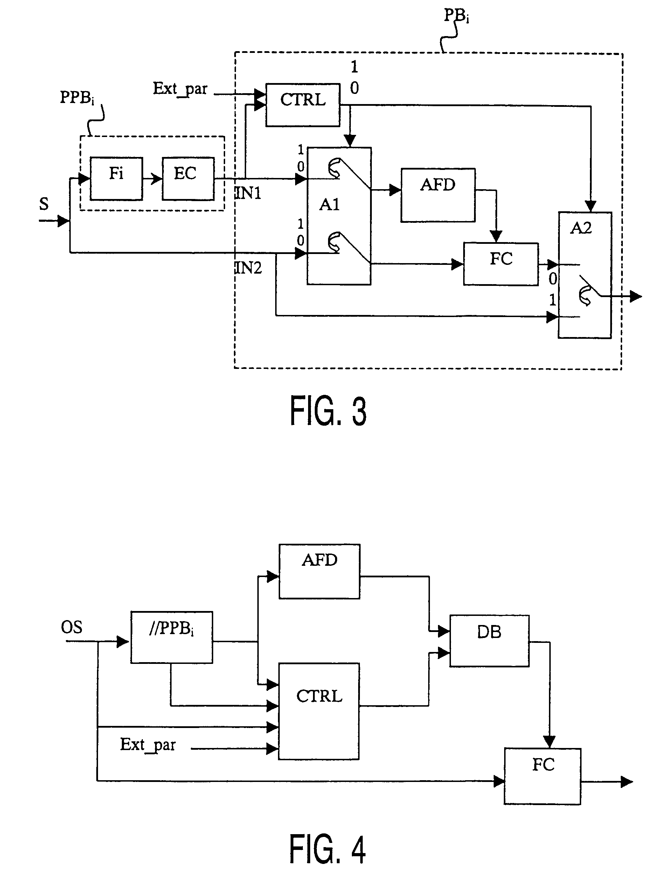

L'invention s'applique de façon avantageuse à un signal numérique comportant (ou dont on peut extraire) une grandeur dont la valeur a une probabilité supérieure à un seuil fixé d'évoluer, au fil des trames, à l'intérieur d'un intervalle de tolérance comprenant au moins une valeur prise lors d'une trame précédente non détectée erronée par le détecteur de trame erronée BFD. Dans le cas d'un tel signal, le détecteur de trame erronée selon l'invention peut être prévu par exemple pour détecter une évolution anormale de la valeur de la grandeur étudiée à l'extérieur dudit intervalle de tolérance. Selon un mode de réalisation préféré de l'invention, représenté sur les figures 3 et 4, ladite grandeur est représentative d'une énergie du signal reçu qui peut être calculée en sortie du filtrage ou bien par l'un des détecteurs de saturation ou de trame erronée.

La figure 2 représente un organigramme simplifié pour illustrer un exemple de procédé de réception selon l'invention, pouvant être mis en oeuvre par un récepteur tel que celui représenté à la figure 1, selon un programme logiciel contenant les instructions appropriées et stocké dans une mémoire du récepteur. Le procédé de réception comporte :

- Une étape de filtrage K1 pour filtrer le signal reçu dans au moins une sous-bandes de fréquences,
- Une étape de détection de saturation K2 pour détecter une saturation du signal dans une sous-bande et pour fournir un résultat de saturation « sat » de ladite sous-bande,

- Une étape de détection de trame erronée K3 pour détecter une erreur de transmission dans une sous-bande et pour délivrer un signal d'erreur « err »en fonction du résultat de saturation de ladite sous-bande.

Selon l'invention, les étapes de détection de saturation K2 et de détection de trame erronée K3 peuvent être effectuées en parallèle ou en série. Si elles sont effectuées en série, le résultat de la détection de saturation est prévu pour activer ou désactiver l'étape de détection de trame erronée. En effet, en cas de saturation de la sous-bande, une détection d'erreur dans les trames de la bande saturée ne serait pas fiable. Si elles sont effectuées en parallèle, une étape supplémentaire de décision est nécessaire pour décider en fonction des résultats des deux détections, si la trame courante est effectivement jugée erronée ou non.

Un premier mode de réalisation de l'invention, appelé « mode cascade », comporte W unités de traitements en série, notées $PU_i$, i étant un indice positif, avec $i \leq W$. Par souci de clarté, il est illustré par la représentation en schéma bloc d'une seule unité de traitement $PU_i$ sur la figure 3. Le nombre W d'unités $PU_i$ en série représente un nombre de sous-bandes permettant de reconstituer la bande passante du signal reçu et l'indice i représente la place de l'unité dans la cascade. Chaque unité $PU_i$ est capable de détecter et éventuellement de corriger des erreurs de transmission dans le signal reçu. La sortie d'une unité $PU_i$ est connectée à l'entrée de l'unité $PU_{i+1}$ jusqu'à i=W-1. Chaque unité est constituée d'un bloc de pré-traitement $PPB_i$ et d'un bloc de traitement PBi. Chaque bloc de pré-traitement $PPB_i$ comprend un filtre $F_i$ et un organe de calcul EC en série. Le filtre $F_i$ est destiné à filtrer le signal reçu dans une bande de fréquence donnée, notée $B_i$. Chaque filtre $F_i$ est choisi de préférence de telle sorte que la bande passante de F1 soit pratiquement adjacente à celle de F2, et ainsi de suite, avec ou sans recouvrement. De préférence la bande $B_{i+1}$ comporte des fréquences supérieures à celles de la bande $B_i$. Pour un signal de parole, les filtres $F_1$ à $F_w$ peuvent être choisis, par exemple, tels que $F_1$= [1200 Hz - 3400 Hz], $F_2$=[800 Hz- 1500 Hz], etc. Le dernier filtre $F_w$ pourra correspondre à la totalité de la bande téléphonique [300 Hz - 3400 Hz].

L'organe de calcul EC est destiné à calculer la valeur de la grandeur caractéristique du signal, ici sont énergie. Cette énergie peut être calculée à l'aide d'estimateurs classiques qui utilisent par exemple le calcul de la somme des valeurs absolue du niveau du signal sur une trame de données ou la somme des valeurs au carré. A titre d'exemple, en utilisant la norme L1 de l'énergie d'une trame notée $\{x_i(NL+1), x_i(NL+2) ..., x_i(NL + L)\}$ l'énergie $E_i(N)$ fournie au bloc de traitement $PB_i$ est notée :

$$E_i(N) = \frac{1}{L} \sum_{k=1}^{L} \left| x_i(N * L + k) \right|$$

où N représente le numéro d'ordre de la trame et où L représente le nombre d'échantillons dans une trame de données.

Le bloc de traitement PBi reçoit en parallèle : sur une entrée, notée IN1, la sortie du bloc de pré-traitement $PPB_i$ qui a calculé l'énergie des trames de la sous-bande filtrée et sur une entrée IN2, le signal d'origine non filtré. Le bloc de traitement PBi comporte :

- un contrôleur CTRL ou détecteur de saturation pour déterminer si la sous bande est saturée,
- un détecteur de trame erronée AFD pour déterminer si la trame courante comporte des erreurs de transmission,
- un correcteur d'erreur FC destiné à corriger la trame détectée erronée et
- des aiguilleurs A1 et A2 pilotés par le contrôleur CTRL en fonction du résultat de la saturation pour réaliser des connections appropriées entre l'entrée IN1 recevant le signal filtré obtenu en sortie du bloc de pré-traitement $PPB_i$, l'entrée IN2 recevant le signal original, l'entrée du détecteur de trame erronée AFD et celle du correcteur de trame FC.

Le contrôleur CTRL reçoit sur une première entrée le signal filtré en provenance du bloc de pré-traitement $PPB_i$ et sur une deuxième entrée facultative, éventuellement un paramètre extérieur ext_par fourni, par exemple, par le décodeur de parole ou le décodeur de canal. La détermination de la saturation de la sous-bande peut dépendre du niveau d'énergie moyen des trames qui la composent et qui est calculé, dans cet exemple, par le bloc de pré-traitement $PPB_i$. Mais la détection de la saturation peut également dépendre de nombreux autres facteurs tels que des informations externes fournies par le décodeur de parole ou le décodeur de canal via le paramètre extérieur ext_par. Des indicateurs de qualité de réception du signal, comme l'indicateur appelé RXQUAL selon la norme GSM peuvent notamment être utilisés. Le passé du signal peut également être utilisé par le contrôleur CTRL pour déterminer la saturation du signal dans une bande donnée, à condition d'être mémorisé par le contrôleur lui-même ou dans une mémoire externe. Plusieurs implémentations sont possibles. Elles peuvent mettre en oeuvre des réseaux neuronaux, de la classification à l'aide de logique floue, etc.

Le fonctionnement du bloc de traitement $PB_i$ est décrit ci-après. Selon la valeur des paramètres externes ext_par et de l'énergie moyenne du signal sur la sous-bande, fournis en entrée du contrôleur CTRL, celui-ci décide d'activer ou de désactiver le détecteur de trame erronée AFD. Il active le détecteur de trame erronée si les informations qui lui sont fournies en entrée permettent de conclure que la sous-bande n'est pas saturée et il désactive le détecteur de trame erronée si la sous bande est saturée. En effet, en cas de contexte saturé, la détection de trame erronée n'est pas fiable. A titre d'exemple de réalisation, pour désactiver le détecteur AFD, le contrôleur impose la valeur 1 aux aiguilleurs A1 et A2. Dans ce cas, le détecteur et le correcteur FC ne reçoivent rien en entrée et la sortie du bloc de traitement est directement reliée au signal d'origine via l'entrée IN2. En revanche, pour activer le détecteur de trame erronée, le contrôleur impose la valeur 0 aux aiguilleurs pour relier l'entrée du détecteur de trame erronée AFD au signal filtré via l'entrée IN1 et relier l'entrée du correcteur de trame au signal original via l'entrée IN2. La sortie du bloc de traitement $PB_i$ est reliée à la sortie du correcteur de trame.

La détection de saturation fonctionne de préférence de la façon suivante. Elle dépend du contexte de réception du signal. Chaque trame reçue contribue à mettre à jour ce contexte. A chaque trame correspond un facteur de saturation, noté Rs(N) déterminé par exemple selon la procédure suivante. Le niveau de saturation Sc(N) est d'abord déterminé dans la sous-bande de fréquence Bi du signal filtré. Cette détermination peut être faite de nombreuses façons. Par exemple, Sc(N) peut être un compteur qui est incrémenté chaque fois que l'amplitude du signal franchit un seuil fixé dans la bande Bi. Une implémentation moins lourde en temps de calcul pourrait être basée sur l'énergie des trames E(N) déjà calculée par le bloc de pré-traitement $PPB_i$. Un set de niveaux $\{LG_1, ..., LG_K\}$ et un set de poids $\{WG_1, ..., WG_K\}$ peuvent alors être définis. Chaque énergie E(N) correspond à un niveau de saturation Sc(N) défini par :

$$Sc(N) = \sum_{k=1}^{K} I(E(N), LG_k) WG_k$$

où

$$I(E(N), LG_k) = \begin{cases} 1 \rightarrow E(N) \geq LG_k \\ 0 \rightarrow sin\,on \end{cases}$$

Le signe $\rightarrow$ indique la condition que l'équation de droite soit remplie. Chaque fois que l'énergie E(N) dépasse le niveau $LG_k$ le score Sc(N) est incrémenté par la pénalité WGk. Ensuite, le facteur de saturation est calculé comme suit :

$$Rs(N) = \beta Rs(N-1) + (1-\beta)Sc(N) \text{ avec } 0 < \beta < 1.$$

La trame courante est alors détectée comme saturée par le contrôleur si :

$$Rs(N) > Thres\_sat$$

où Thres-sat correspond à un seuil prédéterminé. La vitesse d'adaptation du facteur de saturation Rs(N) est contrôlée par le paramètre $\beta$. Sa valeur peut dépendre de la présence d'un contexte de saturation. Par exemple $\beta = \beta 1$ si il y a saturation et $\beta = \beta 2$ sinon. Si l'énergie du signal dans la bande $B_i$ est inférieure au seuil fixé Thres_sat, le facteur de saturation ne doit pas nécessairement être mis à jour ou alors à des intervalles de temps assez espacés. En principe, les périodes de silence ne transportent aucune information sur le niveau moyen du signal. A titre d'exemple :
Si $\{Rs(N) > Thres\_sat\}$

$$R(N+1) = \beta R(N) + (1-\beta)Sc(N)$$

$$\beta = \beta 1$$

sinon

$$R(N+1) = R(N)$$

$$\beta = \beta 2$$

Si aucune saturation n'est détectée, le détecteur de trame erronée est activé. Son fonctionnement est lié à la détection de valeurs anormales de l'énergie du signal en tenant éventuellement compte du contexte de la trame courante N. E(N) est une valeur aléatoire qui appartient à un intervalle de tolérance ou plage de valeurs noté I. En général, I est définie par la précision du processeur utilisé. Par exemple, pour un processeur de signal numérique DSP ayant 16 bits de précision, I=[0 ; 32767] ou I=[0 ; 65535] selon l'usage fait du bit de poids fort. Pour des laps de temps très courts représentant un faible nombre de trames successives, ce qui est le cas ici a priori, les valeurs de la grandeur E(N) qui représente l'énergie de la trame courante est comprise dans des intervalles de tolérance beaucoup plus réduits notés $I_C^N$. L'analyse de l'évolution de l'énergie sur une courte période de temps permet de détecter si l'énergie prend des valeurs à l'intérieur ou à l'extérieur de ces intervalles. Dans le premier cas, la trame est dite bonne (non erronée) et dans le second cas, elles est dite mauvaise (erronée).

Cette analyse peut être réalisée par exemple en définissant une caractérisation statistique à court terme de l'énergie des trames en utilisant la fonction de densité de probabilité ou pdf notée $P_E^N$. Cette méthode nécessite bien sûr de calculer la fonction de densité de probabilité pdf. On détermine alors un intervalle de tolérance noté $I_C{}^N$ basé sur la probabilité d'occurrence de l'énergie E(N). En fixant par exemple cette probabilité à $\alpha$, on en déduit une valeur notée $T_\alpha{}^N$ telle que :

$$\text{prob}(E(N) \leq T_\alpha^N) = \int_0^{T_\alpha^N} P_E^N(x)dx$$

L'intervalle de tolérance est défini par $I_C{}^N = [0 ; T_\alpha{}^N]$. Si $E(N) \in I_C{}^N$ alors la trame courante est dite non erronée, sinon elle est dite erronée. La fonction de densité de probabilité $P_E{}^N$ dépend du temps puisqu'elle dépend des particularités locales des trames traitées. L'intervalle $I_C{}^N$ et la valeur $T_\alpha{}^N$ dépendent aussi du temps puisqu'ils sont déduits de la quantité $P_E{}^N$.

D'autres méthodes peuvent être utilisées pour vérifier la valeur de l'énergie des trames telles que des méthodes basées sur des histogrammes, des réseaux de neurones, des approches paramétriques, etc. A titre d'exemple, une méthode pourrait être basée sur une analyse paramétrique de la valeur $T_\alpha{}^N$ comme fonction des valeurs précédentes des énergies des trames notées E(N-1), ..., E(N-P). Par exemple, $T_\alpha{}^N$ pourrait être dépendant d'une moyenne à court terme de l'énergie notée $M_E{}^N$ ainsi que d'une déviation standard de l'énergie de la trame notée $\sigma_E{}^N$. Ces deux quantités peuvent être estimées respectivement selon les équations suivantes :

$$M_E^N = \lambda_1 \sum_{k=1}^P \gamma_1^k \, E(N-k)$$

$$\sigma_E^N = \lambda_2 \sqrt{\sum_{k=1}^P \gamma_2^k \left[ E(N-k) - M_E^N \right]^2}$$

où $(\lambda_1, \lambda_2)$ et $(\gamma_1, \gamma_2)$ sont des paramètres de contrôle de la déviation de l'estimation et de la décroissance du poids donné aux valeurs les plus anciennes de l'énergie. P représente la longueur de la mémoire de l'estimateur. Alors $T_\alpha{}^N = F(M_E{}^N; \sigma_E{}^N)$ où F( ) est une fonction pouvant être prédéfinie pendant une phase d'apprentissage préalable ou bien estimée en ligne. Par exemple, on peut définir $T_\alpha{}^N = \eta_1{}^N M_E{}^N + \eta_2{}^N \sigma_E{}^N$ où $(\eta_1{}^N; \eta_2{}^N)$ sont des paramètres ajustables.

Si la trame courante est déclarée non erronée par le détecteur de trame erronée AFD, elle ne sera pas corrigée. Dans le cas contraire, une correction de la trame erronée pourra être effectuée par le correcteur de trame FC. Plusieurs méthodes sont possibles pour effectuer cette correction. La trame erronée peut être atténuée ou simplement remplacée par du silence ou un bruit de confort dans le cas par exemple d'une trame contenant des données audio. La recommandation GSM 06.11 (ETS 300580-3) décrit une procédure de substitution et de traitement des trames perdues dans le cas de transmissions radio utilisant un codeur de parole plein débit. La trame erronée peut également être remplacée par une extrapolation des trames précédentes. Le correcteur de trame FC travaille sur les trames d'origine non filtrées reçues sur l'entrée IN2 du bloc de traitement PB$_i$. Lorsqu'une trame est détectée erronée, les trames suivantes détectée non erronées peuvent également être modifiée pour assurer une transition « confortable » entre des trames atténuées / supprimées et des trames non atténuées.

Un deuxième mode de réalisation appelé mode parallèle est présenté à la figure 4. Les principes généraux sont identique à ceux du premier mode, les blocs ayant la même fonction portent les mêmes références. En revanche, le bloc de pré-traitement, noté //PPB fonctionne différemment. La sélection du signal d'entrée original OS dans des sous-bandes de fréquences B$_i$ délimitées par des filtres F$_i$, ainsi que les calculs d'énergie (pouvant utiliser des estimateurs classiques) sont effectués en parallèle pour toutes les bandes de fréquence B$_i$. Le résultat des calculs est un vecteur d'énergies. Le détecteur d'erreur ou de trame erronée AFD et le contrôleur ou détecteur de saturation CTRL fonctionnent en parallèle sur les différentes bandes de fréquences dans lesquelles le signal d'entré est filtré. La sortie de chaque détecteur est un vecteur. Un organe de décision supplémentaire DB est utilisé pour décider, à partir des résultats du détecteur de trame erronée AFD et du contrôleur CTRL, si la trame courante doit être corrigée ou non. Le bloc de décision DB peut être implémenté de différentes façon, par exemple en utilisant de la logique floue ou des réseaux de neurones. Une variante simple est d'effectuer une corrélation entre les vecteurs d'entrée. En notant par exemple A et C respectivement les vecteurs de sortie des détecteurs de trame erronée AFD et de saturation CTRL, A$_k$ et C$_k$ respectivement les composantes d'ordre k des vecteurs A et C, alors la détection d'une trame erronée dans la bande B$_k$ peut être indiquée par l'affectation de la valeur 1 à la composante A$_k$. Sinon la valeur 0 peut lui être affectée. En revanche, si le contrôleur ou détecteur de saturation décide de désactiver le système à cause d'une saturation de la bande B$_k$, alors C$_k$=1. Sinon C$_k$=0. Un score S peut alors être calculé pour la trame courante comme le produit scalaire des vecteurs A et C :

$$S = (A)^T C = \sum_{k=1}^J A_k C_k$$

où $( )^T$ indique l'opérateur de transposée. La procédure de décision exécutée par l'organe de décision DB peut alors être la suivante. Un seuil de référence, noté Thres_gf, étant fixé, si S<Thres_gf alors la trame courante est dite bonne (non erronée), sinon elle est dite mauvaise (erronée). Dans le dernier cas seulement la trame pourra être corrigée par le correcteur de trame FC utilisant les techniques déjà mentionnées à la figure 3.

La figure 5 montre un exemple de système selon l'invention formé principalement par un radio téléphone 51, une station radio de base 52 et un canal de transmission 53 formé par l'air, l'ensemble illustrant une transmission radio entre la station radio de base 52 et le radio téléphone 51. Le radio téléphone 51 comporte un récepteur du genre de celui représenté à la figure 1. Un tel système permet d'améliorer, en réception, la qualité de réception audio du signal reçu par le radio téléphone.

## Revendications

1. Récepteur pour recevoir, dans une bande de fréquences donnée, un signal numérique formaté en trames de données successives et comportant :

   - un bloc de filtrage pour filtrer le signal reçu dans au moins une sous-bande de fréquences,
   - un détecteur de saturation pour détecter une saturation du signal dans l'une des sous-bande de fréquences filtrées et pour fournir une information de saturation de ladite sous-bande,
   - un détecteur de trame erronée pour détecter une erreur de transmission dans une trame reçue, dit trame courante, en fonction de l'information de saturation de la sous-bande à laquelle appartient la trame courante et pour en déduire une indication de trame erronée.

2. Récepteur selon la revendication 1, pour recevoir un signal numérique comportant une grandeur dont la valeur a une probabilité supérieure à un seuil fixé d'évoluer, au fil des trames, à l'intérieur d'un intervalle de tolérance comprenant au moins une valeur prise lors d'une trame précédente non indiquée comme une trame erronée par le détecteur de trame erronée, récepteur dans lequel ledit détecteur de trame erronée est prévu pour détecter une évolution anormale de ladite valeur à l'extérieur dudit intervalle de tolérance.

3. Récepteur selon la revendication 2, dans lequel le dispositif de détection de saturation est muni de moyens de calcul et de comparaison pour calculer une valeur moyenne de ladite grandeur dans une sous-bande et pour la comparer à une valeur de référence, pour en déduire ladite information de saturation.

4. Récepteur selon la revendication , dans lequel le dispositif de détection de trame erronée comprend :

   - un détecteur d'erreur pour détecter une erreur de transmission dans une trame de la sous-bande et délivrer un signal d'erreur,
   - un bloc de décision pour recevoir, du détecteur de saturation d'une part, l'information de saturation de la sous-bande concernée et du détecteur d'erreur d'autre part, le signal d'erreur, pour décider que la trame courante est erronée si le signal d'erreur indique une erreur de transmission et si l'information de saturation indique que la sous-bande n'est pas saturée.

5. Récepteur selon l'une des revendications, dans lequel ladite grandeur est représentative d'une énergie du signal reçu.

6. Procédé pour recevoir, dans une bande de fréquences donnée, un signal numérique formaté en trames de données successives et comportant :

   - Une étape de filtrage pour filtrer le signal reçu dans au moins une sous-bande de fréquences,
   - Une étape de détection de saturation pour détecter une saturation du signal dans l'une des sous-bande de fréquences filtrées et pour fournir une information de saturation de ladite sous-bande,
   - Une étape de détection de trame erronée pour détecter une erreur de transmission dans une trame reçue, dit trame courante, en fonction de l'information de saturation de la sous-bande a laquelle appartient la trame courante et pour en déduire une indication de trame erronée.

7. Produit programme d'ordinateur, pour un récepteur selon la revendication 1, comprenant des portions de code de logiciel qui, une fois chargées dans le récepteur, lui permettent d'exécuter les étapes du procédé selon la revendication.

8. Téléphone pour recevoir des signaux numériques en provenance d'un système de télécommunications **caractérisé en ce qu'**il comporte un récepteur selon la revendication 1.

9. Système de télécommunications pour échanger des signaux numériques entre au moins un émetteur et un récepteur, **caractérisé en ce qu'**il comprend un récepteur selon la revendication 1.

FIG. 1

FIG. 2

FIG. 5

FIG. 3

FIG. 4

Office européen des brevets

## RAPPORT DE RECHERCHE EUROPEENNE

Numéro de la demande

EP 01 20 2390

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 98 13941 A (QUALCOMM INC) 2 avril 1998 (1998-04-02) * page 5, ligne 20 - ligne 24 * * page 9, ligne 16 - ligne 22; figure 4 * | 1-3,5-9 | H04L1/20 |
| A | WO 99 66494 A (COMSAT CORP) 23 décembre 1999 (1999-12-23) * page 5, ligne 4 - ligne 9 * * page 10, ligne 4 - ligne 19; figures 3A-3C * | 1,6 | |
| A | EP 0 413 505 A (AMERICAN TELEPHONE & TELEGRAPH) 20 février 1991 (1991-02-20) * colonne 16, ligne 32 - ligne 47 * | 1,6 | |

DOMAINES TECHNIQUES RECHERCHES (Int.Cl.7)

H04L
G10L

Le présent rapport a été établi pour toutes les revendications

| Lieu de la recherche | Date d'achèvement de la recherche | Examinateur |
|---|---|---|
| BERLIN | 9 octobre 2001 | Martínez Martínez, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 20 2390

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-10-2001

| Document brevet cité au rapport de recherche | | Date de publication | Membre(s) de la famille de brevet(s) | | Date de publication |
|---|---|---|---|---|---|
| WO 9813941 | A | 02-04-1998 | US | 6205130 B1 | 20-03-2001 |
| | | | AU | 4497097 A | 17-04-1998 |
| | | | EP | 0928521 A1 | 14-07-1999 |
| | | | JP | 2001501790 T | 06-02-2001 |
| | | | WO | 9813941 A1 | 02-04-1998 |
| WO 9966494 | A | 23-12-1999 | AU | 4675999 A | 05-01-2000 |
| | | | EP | 1088205 A1 | 04-04-2001 |
| | | | WO | 9966494 A1 | 23-12-1999 |
| EP 0413505 | A | 20-02-1991 | CA | 2020899 A1 | 19-02-1991 |
| | | | DE | 69024282 D1 | 01-02-1996 |
| | | | DE | 69024282 T2 | 15-05-1996 |
| | | | EP | 0413505 A1 | 20-02-1991 |
| | | | FI | 98422 B | 28-02-1997 |
| | | | JP | 2595372 B2 | 02-04-1997 |
| | | | JP | 3088517 A | 12-04-1991 |
| | | | KR | 203722 B1 | 15-06-1999 |
| | | | US | 5208816 A | 04-05-1993 |

EPO FORM P0460